# EUROPEAN PATENT SPECIFICATION

(11) **EP 0 544 697 B1**
(45) Date of publication and mention of the grant of the patent: **28.06.1995**
(21) Application number: 91913314.0
(22) Date of filing: 12.07.1991
(51) Int. Cl.: B29C 53/60, B29C 53/80, B29C 53/58

(54) **METHOD AND DEVICE FOR WINDING ONE OR MORE LAYERS OF STRIP MATERIAL AROUND A TUBULAR ELEMENT**
VERFAHREN UND VORRICHTUNG ZUM UMWICKELN EINES ROHRKÖRPERS MIT EINER ODER MEHREREN LAGEN EINES BANDMATERIALS
PROCEDE ET APPAREIL PERMETTANT D'ENROULER UNE OU PLUSIEURS COUCHES D'UN MATERIAU EN RUBAN AUTOUR D'UN ELEMENT TUBULAIRE

(30) Priority: 19.07.1990 NL 9001652
(43) Date of publication of application: 09.06.1993
(73) Proprietor: WAVIN B.V., NL-8011 CW Zwolle (NL)
(72) Inventor: KIEFT, Hendrik, Hermannus, NL-7701 LN Dedemsvaart (NL)
(74) Representative: Barendregt, Frank, Drs.
(86) International application number: NL9100125
(87) International publication number: WO9201550

(56) References cited:
- CA-A- 748 843
- US-A- 2 011 172

## Description

The present invention relates to a method for winding one or more layers of strip material under predetermined tension around a tubular element, for each layer the strip material being taken from the inside of a buffer reel which is arranged around the tubular element to be wound, while the tubular element is displaced axially and the buffer reel is driven so that it rotates, clamping means situated in a rotary casing around the buffer reel also being present for clamping the end of the strip material present on the buffer reel, while the buffer reel is provided periodically with a new buffer of strip material, prior to which the casing is held still, said end is connected by means of a connecting device to a new length of strip material, the buffer reel is filled with strip material, and the end of the new length of strip material is then clamped in the clamping means and the casing is driven at the same speed as the top layer of the strip material on the buffer reel, and the process is carried out as many times as layers of strip material are desired.

Such a method is known from Canadian Patent Specification No. 748,843, in which a method and a device are described for the production of tubular, reinforced plastic objects, in the case of which a strip is drawn from the inside of a reel and wound around a mandrel. The reel in that case rotates around the mandrel, and the mandrel is moved forward axially inside the reel. The strip to be wound around the mandrel comprises directed fibres which are coated with a solid, not completely cured resin. After the winding, the resin is melted and complete impregnation of the fibres takes place, following which the resin is cured, and a strong and rigid object is obtained.

The above-mentioned method has, however, the major disadvantage that for refilling of the reel with strip made of resin-coated fibres the mandrel has to be stopped and the end of the strip still present on the reel then connected to a new length of strip and the winding continued. During this winding the difference in diameter between the reel and the mandrel causes the strip to be wound more quickly onto the reel than it is removed from the inside thereof for winding onto the mandrel. When the reel is full or the new length of strip has come to its end, the reel and the mandrel are stopped. The end of the new length of strip is clamped in a casing around the reel, and the winding is continued. With this method it is therefore never possible to wind a pipe of endless length continuously, since the movement forward of the mandrel has to be ended for each filling of the reel.

The object of the present invention is to overcome the above-mentioned disadvantage, and to that end the invention is characterised in that during the connection of the end of the strip material present on the buffer reel to the end of a new length of strip material the winding process is continued and, prior to the connection of the two ends, the casing with the clamping means is driven so that for a predetermined duration it rotates at a higher speed than the top layer of the strip material on the buffer reel, following which the casing with the clamping means is stopped, the end of the strip material on the buffer reel is connected to a new length of strip material, and the buffer reel is filled.

Rotating the casing with the clamping means at a higher speed than the speed of the top layer of the strip material on the buffer reel for a predetermined duration produces a play which can be selected in such a way that it is sufficient to bridge the time duration needed for connecting the end of a new length of strip material to the end of the strip material on the buffer reel. According to the invention, a method is produced in which in principle a tubular element with infinite length can be provided continuously with one or more layers of strip material. This method is suitable both for forming so-called wound pipes on a mandrel and for providing a pipe with one or more wound layers of strip material. The method according to the invention combines the continuous winding of one or more layers of strip material around a tubular element with semi-continuous filling of the buffer reel.

The tubular element is preferably a pipe which is extruded continuously from thermoplastic material. The method according to the invention is particularly suitable for this, since for refilling of the buffer reel it is not necessary to stop the pipe to be provided with wound layers of strip material. The pipe can therefore be extruded continuously and provided continuously with one or more wound layers of strip material.

The layers of strip material wound around the pipe are advantageously connected to each other only over a part of the length of the pipe, and in particular at the end of the pipe. Connecting the layers of strip material only over a part of the length of the pipe means that a pipe which can withstand an extremely high internal pressure and tensile load and which is also very flexible is obtained. Of course, the layers must be guided during the winding, in order to prevent them from shifting relative to the pipe and possibly unwinding.

In particular, the combination of layers of strip material wound around the pipe and connected to each other is also connected to the pipe over a part of the pipe, and preferably at the position of the connection. The cohesion of the layers of strip material wound around the pipe is thereby improved, and the pipe is improved. The layers of strip material are also prevented in this way from being able to shift relative to the pipe.

The strip material is preferably made of fibre strip which may or may not be impregnated with plastic, and is more preferably made of glassfibre strip impregnated with polypropylene. It will be clear that fibre strip does not only mean strip in which the fibres are clearly visible, but that, for example, stretched plastic strip, metal gauze strip or the like is also suitable. The impregnation of the fibre strip with plastic increases the strength of the fibre strip and provides the fibre strip with some elasticity, which is advantageous for winding thereof under predetermined tension.

Many techniques such as gluing, welding etc. are known to the expert for connecting the layers of strip material to each other and/or the pipe; the same techniques can be used for connecting lengths of strip material to each other.

The invention also relates to a device for carrying out the method according to the invention, at least comprising an annular buffer reel for strip material to be wound, drive means for rotary driving of the buffer reel, means for guiding a tubular element through the buffer reel, a casing with clamping means for clamping one end of the strip material to be wound, drive means for rotary driving of the casing, and a connecting device for connecting together the end of the strip material on the buffer reel and an end of a new length of strip material, the device being characterised in that the drive means of the casing are controllable, in such a way that, prior to the connection of the two ends, the casing can be driven for some time at a higher speed than the speed of the top layer of the strip material on the buffer reel.

It goes without saying that several of such devices can be placed one after the other, so that several layers of strip material can be wound around the pipe, with possibly different winding angles. The method and device according to the invention are suitable both for the production of wound pipes which are wound round a mandrel, such as, for example, glassfibre-reinforced epoxy pipes, and for the winding of one or more layers of strip material around a pipe, in particular a continuously extruded thermoplastic pipe.

The invention will be explained in greater detail below with reference to the appended drawing, in which:

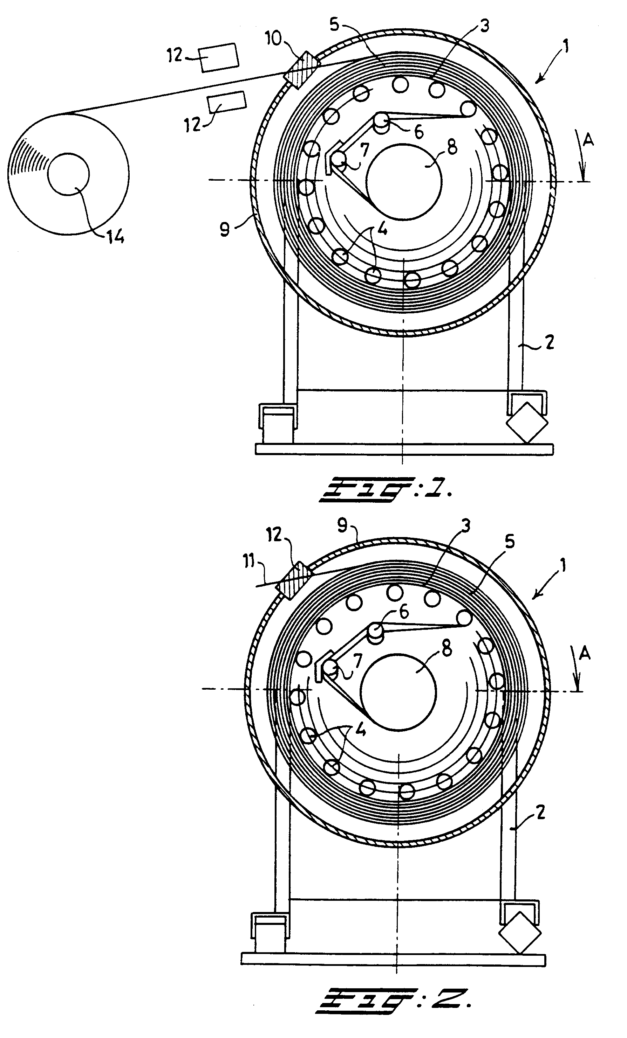

Figs. 1 - 4 show the device according to the invention during different stages of the process.

Corresponding parts are indicated by the same reference numbers in the figures. Reference number 1 indicates the whole winding device according to the invention, comprising a frame 2 on which there is a buffer reel 3 consisting of several rollers 4 set up in a circle, on which a quantity of strip material 5 is wound. Situated inside the buffer reel 3 are a guide roller 6 and a pretensioning roller 7. The latter serves to keep the strip material 5 to be wound around a pipe 8 at a predetermined tension and to set the winding angle thereof. Reference number 9 indicates a rotary casing in which there are clamping means 10 which are for the purpose of clamping the end of the strip material 5 around the buffer reel 3. Reference number 12 indicates a welding device which serves as a connecting device for connecting the end 13 of a new length of strip material to the end 11 of the strip material 5 wound around the buffer reel.

Reference number 14 indicates a reel containing a new length of strip material.

An embodiment of the method according to the invention will now be described in greater detail by way of example.

For the winding of one or more layers of strip material 5 at a predetermined tension around a pipe 8, in Fig. 1 the strip material 5 from reel 14 is passed via the clamping means 10 in the casing 9 between two rollers 4 of the buffer reel 3, along guide roller 6 and pretensioning roller 7 to pipe 8, and the end of the strip material 5 is fixed to it.

The buffer reel 3 is then turned in the direction of arrow A, causing the winding to begin. At the same time, pipe 8 is displaced axially. This displacement can be achieved by, for example, extruding the pipe 8 continuously. Since the buffer reel 3 is of a greater diameter than the pipe 8, the rotation of the buffer reel 3 in the direction of arrow A causes more strip material 5 to be wound onto the buffer reel 3 than is removed from the inside of buffer reel 3 for the winding of pipe 8. During this operation the casing 9 stands still, and clamping means 10 are opened. When a large enough quantity of strip material 5 is wound onto the buffer reel 3 the clamping means 10 are closed and, if necessary, the strip material 5 is cut between the clamping means 10 and the reel 14.

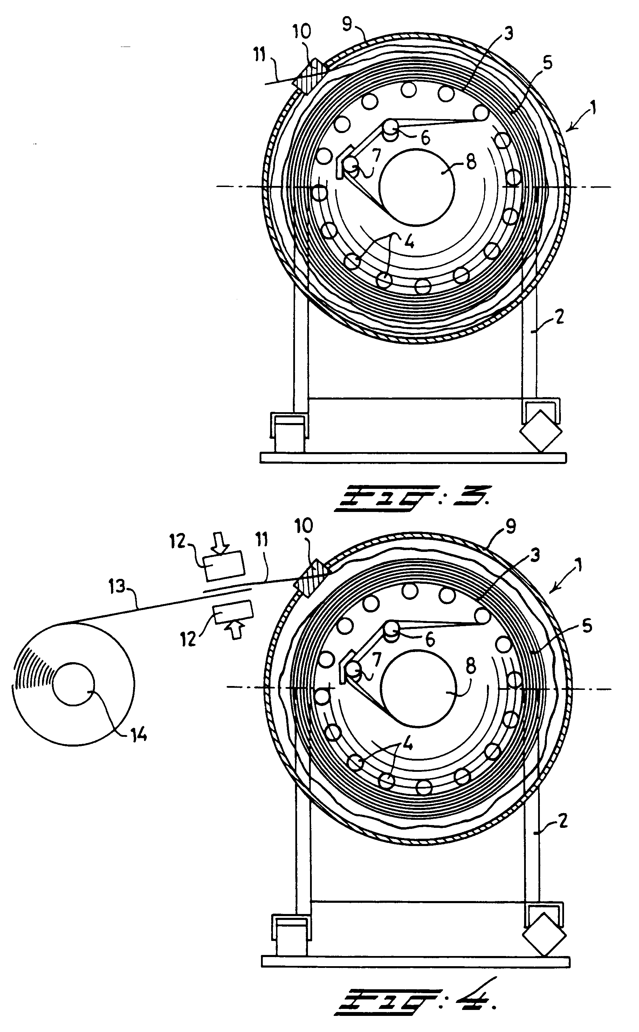

In Fig. 2 casing 9 is then driven at the same speed as the outer layer of the strip material 5 wound on the buffer reel 3. This driving is not absolutely necessary, since it is also possible to allow casing 9 to rotate freely, for example with some friction, and it is then carried along by itself by the strip material situated in clamp 10. At this moment pipe 8 can be provided with a wound layer of strip material 5 for a longer period of time.

When the quantity of strip material 5 is beginning to be used up on the buffer reel 3, casing 9, as indicated in Fig. 3, is driven at a higher speed than the speed of the outer layer of strip material 5 on the buffer reel 3, so that a quantity of strip material 5 is wound from the outside of the buffer reel 3.

After this the casing 9, as shown in Fig. 4, is stopped, the end 11 is connected to an end 13 of a new length of strip material by means of the welding device 12, following which the filling operation described with reference to Fig. 1 can be repeated. The whole cycle can be repeated an infinite number of times, without it being necessary to interrupt the axial movement of pipe 8.

The drives of buffer reel 3 and casing 9 are not shown in the drawing, but can be in all kinds of forms such as, for example, drive rollers, drive belts, gear wheel drive etc.

It will be clear that the amount of play in the strip material shown in Fig. 3, due to the temporary higher speed of the casing 9, depends on the time required for connecting the ends 11 and 13.

Several devices according to the invention can be placed in series, so that different layers of strip material can be wound in succession, possibly with differing winding angles.

The device and method according to the invention are particularly suitable for winding one or more layers of strip material around a pipe at a predetermined tension, the layers being connected to each other only over a part of the length, and possibly as a connected combination also being connected to the pipe 8 over a part of the length of the pipe. Such pipes have great flexibility and can withstand high internal pressure and tensile loads. The winding angles of successive layers of strip material can be selected depending on the application.

## Claims

1. A method for winding one or more layers of strip material (5) under predetermined tension around a tubular element, for each layer the strip material being taken from the inside of a buffer reel (3) which is arranged around the tubular element to be wound, while the tubular element is displaced axially and the buffer reel is driven so that it rotates, clamping means (10) situated in a rotary casing (9) around the buffer reel also being present for clamping the end of the strip material present on the buffer reel, while the buffer reel (3) is provided periodically with a new buffer of strip material , prior to which the casing is held still, said end is connected by means of a connecting device (12) to a new length of strip material, the buffer reel is filled with strip material, and the end of the new length of strip material is then clamped in the clamping means (10) and the casing is driven at the same speed as the top layer of the strip material on the buffer reel, and the process is carried out as many times as layers of strip material are desired, characterised in that during the connection of the end (11) of the strip material (5) present on the buffer reel (3) to the end (13) of a new length of strip material (5) the winding process is continued and, prior to the connection of the two ends (11, 13), the casing (9) with the clamping means (10) is driven so that for a predetermined duration it rotates at a higher speed than the top layer of the strip material (5) on the buffer reel, following which the casing (9) with the clamping means (10) is stopped, the end (11) of the strip material (5) on the buffer reel (3) is connected to a new length (13) of strip material, and the buffer reel (3) is filled.

2. The method according to claim 1, characterized in that the tubular element is a pipe (8) which is extruded continuously from thermoplastic material.

3. The method according to claim 2, characterized in that the layers of strip material (5) wound around the pipe (8) are connected to each other only over a part of the length of the pipe (8).

4. The method according to claim 3, characterized in that the layers of strip material (5) wound around the pipe (8) are connected to each other at the ends of the pipe (8).

5. The method according to claims 3 - 4, characterized in that the combination of layers of strip material (5) wound around the pipe (8) and connected to each other is also connected to the pipe (8) over a part of the pipe (8).

6. The method according to claim 5, characterized in that the combination of layers of strip material (5) wound around the pipe (8) and connected to each other is connected to the pipe (8) at the position of the connection.

7. The method according to claims 1 - 6, characterized in that the strip material (5) is made of fibre strip which may or may not be impregnated with plastic.

8. The method according to claim 7, characterized in that the strip material (5) is made of glassfibre strip impregnated with polypropylene.

9. A device for carrying out the method according to one or more of claims 1 - 6, at least comprising an annular buffer reel (3) for strip material to be wound, drive means for rotary driving of the buffer reel, means for guiding a tubular element through the buffer reel, a casing (9) with clamping means (10) for clamping one end of the strip material to be wound, drive means for rotary driving of the casing, and a connecting device (12) for connecting together the end of the strip material on the buffer reel and an end of a new length of strip material, characterised in that the drive means of the casing (9) are controllable, in such a way that, prior to the connection of the two ends (11, 13), the casing (9) can be driven for some time at a higher speed than the speed of the top layer of the strip material (5) on the buffer reel (3).

## Patentansprüche

1. Verfahren zum Umwickeln eines Rohrkörpers mit einer oder mehreren Lagen eines Bandmaterials (5) unter vorbestimmter Spannung, wobei das Bandmaterial für jede Lage der Innenseite einer Speicherrolle (3) entnommen wird, die um den zu bewickelnden Rohrkörper herum angeordnet ist, während der Rohrkörper in axialer Richtung verlagert und die Speicherrolle so angetrieben wird, daß sie rotiert, ferner eine in einem Drehgehäuse (9) um die Speicherrolle gelegene Klemmeinrichtung (10) zum Festklemmen des Endes des auf der Speicherrolle vorhandenen Bandmaterials vorhanden ist, die Speicherrolle (3) periodisch mit einem neuen Speichervorrat des Bandmaterials versehen, wobei vorher das Gehäuse angehalten wird, das genannte Ende mittels einer Verbindungsvorrichtung (12) mit einer neuen Länge des Bandmaterials verbunden, die Speicherrolle mit Bandmaterial aufgefüllt, das Ende der neuen Länge des Bandmaterials sodann in der Klemmeinrichtung (10) festgeklemmt und das Gehäuse mit der gleichen Geschwindigkeit wie die obere Lage des Bandmaterials auf der Speicherrolle angetrieben wird und wobei der Vorgang so viele Male ausgeführt wird, wie Lagen des Bandmaterials verlangt werden, **dadurch gekennzeichnet**, daß während der Verbindung des Endes (11) des auf der Speicherrolle (3) vorhandenen Bandmaterials (5) mit dem Ende (13) einer neuen Länge des Bandmaterials (5) der Wickelvorgang fortgesetzt und, vor dem Verbinden der beiden Enden (11,13), das Gehäuse (9) mit der Klemmeinrichtung (10) derart angetrieben wird, daß es für eine vorbestimmte Zeitdauer mit einer höheren Geschwindigkeit als die obere Lage des Bandmaterials (5) auf der Speicherrolle umläuft, wonach das Gehäuse (9) mit der Klemmeinrichtung (10) angehalten, das Ende (11) des Bandmaterials (5) auf der Speicherrolle (3) mit einer neuen Länge (13) des Bandmaterials verbunden und die Speicherrolle (3) aufgefüllt wird.

2. Verfahren nach Anspruch 1, dadurch gekennzeichnet, daß der Rohrkörper ein Rohr (8) ist, das kontinuierlich aus einem thermoplastischen Kunststoffmaterial extrudiert wird.

3. Verfahren nach Anspruch 2, dadurch gekennzeichnet, daß die auf das Rohr (8) aufgewickelten Lagen des Bandmaterials (5) miteinander nur über einen Teil der Länge des Rohres (8) verbunden werden.

4. Verfahren nach Anspruch 3, dadurch gekennzeichnet, daß die auf das Rohr (8) aufgewickelten Lagen des Bandmaterials (5) miteinander an den Enden des Rohres (8) verbunden werden.

5. Verfahren nach den Ansprüchen 3 bis 4, dadurch gekennzeichnet, daß die Kombination von auf das Rohr (8) aufgewickelten und miteinander verbundenen Lagen des Bandmaterials (5) ferner mit dem Rohr (8) über einen Teil des Rohres (8) verbunden wird.

6. Verfahren nach Anspruch 5, dadurch gekennzeichnet, daß die Kombination von auf das Rohr (8) aufgewickelten und miteinander verbundenen Lagen des Bandmaterials (5) mit dem Rohr (8) an der Stelle der Verbindung verbunden wird.

7. Verfahren nach den Ansprüchen 1 bis 6, dadurch gekennzeichnet, daß das Bandmaterial (5) aus Faserband hergestellt wird, das mit Kunststoff imprägniert sein kann oder nicht.

8. Verfahren nach Anspruch 7, dadurch gekennzeichnet, daß das Bandmaterial (5) aus mit Polypropylen imprägniertem Glasfaserband hergestellt ist.

9. Vorrichtung zur Durchführung des Verfahrens nach einem oder mehreren der Ansprüche 1 bis 6, zumindest bestehend aus einer ringförmigen Speicherrolle (3) für zu wickelndes Bandmaterial, einer Antriebseinrichtung für einen Drehantrieb der Speicherrolle, einer Einrichtung zum Führen eines Rohrkörpers durch die Speicherrolle, einem Gehäuse (9) mit einer Klemmeinrichtung (10) zum Festklemmen eines Endes des zu wickelnden Bandmaterials, einer Antriebseinrichtung für einen Drehantrieb des Gehäuses und einer Verbindungsvorrichtung (12) zum Verbinden des Endes des Bandmaterials auf der Speicherrolle mit einem Ende einer neuen Länge des Bandmaterials, dadurch gekennzeichnet, daß die Antriebseinrichtung des Gehäuses (9) in der Weise steuerbar ist, daß, vor der Verbindung der beiden Enden (11,13), das Gehäuse (9) für eine gewisse Zeit mit einer höheren Geschwindigkeit als die Geschwindigkeit der oberen Lage des Bandmaterials (5) auf der Speicherrolle (3) angetrieben werden kann.

## Revendications

1. Procédé pour enrouler une ou plusieurs couches d'un matériau en bande (5) avec une tension prédéterminée autour d'un élément tubulaire, le matériau en bande étant pour chaque couche dévidé à partir de l'intérieur d'une bobine tampon (3) disposée autour de l'élément tubulaire destiné à être enveloppé, tandis que l'élément tubulaire est déplacé axialement et que la bobine tampon est entraîné pour tourner, des moyens de serrage (10) situés dans un carter rotatif (9) autour de la bobine tampon étant également prévus pour serrer l'extrémité du matériau en bande présent sur la bobine tampon, tandis que la bobine tampon (3) est pourvue périodiquement d'un nouveau tampon de matériau en bande, opération avant laquelle le carter est maintenu à l'arrêt, ladite extrémité est raccordée au moyen d'un dispositif de raccordement (12) à une nouvelle longueur de matériau en bande, la bobine tampon est chargée en matériau en bande, et l'extrémité de la nouvelle longueur de matériau en bande est ensuite serrée dans les moyens de serrage (10) et le carter est entraîné à la même vitesse que la couche supérieure du matériau en bande présent sur la bobine tampon, le processus étant exécuté un nombre de fois égal au nombre de couches de matériau en bande voulu, caractérisé en ce que pendant le raccordement de l'extrémité (11) du matériau en bande (5) présent sur la bobine tampon (3), à l'extrémité (13) d'une nouvelle longueur de matériau en bande (5), le processus d'enroulement est poursuivi et, préalablement au raccordement des deux extrémités (11, 13), le carter (9) équipé des moyens de serrage (10) est entraîné pour, pendant une durée prédéterminée, tourner à une plus grande vitesse que la couche supérieure du matériau en bande (5) présent sur la bobine tampon, après quoi, le carter (9) équipé des moyens de serrage (10) est stoppé, l'extrémité (11) du matériau en bande (5) présent sur la bobine tampon (3) est raccordée à une nouvelle longueur (13) de matériau en bande, et la bobine tampon (3) est chargée.

2. Procédé selon la revendication 1, caractérisé en ce que l'élément tubulaire est un tube (8) extrudé en continu à partir d'une matière thermoplastique.

3. Procédé selon la revendication 2, caractérisé en ce que les couches du matériau en bande (5) enroulées autour du tube (8) sont reliées les unes aux autres sur une partie seulement de la longueur du tube (8).

4. Procédé selon la revendication 3, caractérisé en ce que les couches du matériau en bande (5) enroulées autour du tube (8) sont reliées les unes aux autres au niveau des extrémités du tube (8).

5. Procédé selon les revendications 3 et 4, caractérisé en ce que la combinaison des couches du matériau en bande (5) enroulées autour du tube (8) et reliées les unes aux autres, est également reliée au tube (8) sur une partie de celui-ci.

6. Procédé selon la revendication 5, caractérisé en ce que la combinaison des couches du matériau en bande (5) enroulées autour du tube (8) et reliées les unes aux autres, est reliée au tube (8) à l'endroit de la liaison.

7. Procédé selon les revendications 1 à 6, caractérisé en ce que le matériau en bande (5) est formé d'une bande de fibres imprégnée ou non d'une matière plastique.

8. Procédé selon la revendication 7, caractérisé en ce que le matériau en bande (5) est formé d'une bande de fibres de verre imprégnée de polypropylène.

9. Appareil pour mettre en oeuvre le procédé selon une ou plusieurs des revendications 1 à 6, comprenant au moins une bobine tampon annulaire (3) pour un matériau en bande destiné à être enroulé, des moyens d'entraînement pour entraîner en rotation la bobine tampon, des moyens pour guider un élément tubulaire à travers la bobine tampon, un carter (9) équipé de moyens de serrage (10) pour serrer l'une des extrémités du matériau en bande destiné à être enroulé, des moyens d'entraînement destinés à entraîner en rotation le carter, et un dispositif de racoordement (12) destiné à raccorder entre elles l'extrémité du matériau en bande présent sur la bobine tampon et une extrémité d'une nouvelle longueur de matériau en bande, caractérisé en ce que les moyens d'entraînement du carter (9) peuvent être commandés de telle façon que, préalablement au raccordement des deux extrémités (11, 13), le carter (9) peut être entraîné pendant un certain temps à une vitesse supérieure à la vitesse de la couche supérieure du matériau en bande (5) présent sur la bobine tampon (3).
